# EUROPÄISCHE PATENTANMELDUNG

(11) **EP 1 544 020 A2**
(43) Veröffentlichungstag der Anmeldung: **22.06.2005**
(21) Anmeldenummer: 04029287.2
(22) Anmeldetag: 10.12.2004
(51) Int. Cl.: B60K 11/04

(54) **Fahrzeug mit einer Kühleinrichtung für ein Verbrennungsmotor**

(30) Priorität: 18.12.2003 DE 10359512
(71) Anmelder: DaimlerChrysler AG, 70567 Stuttgart (DE)
(72) Erfinder: Frank, Thorsten, 71134 Aidlingen (DE); Kramb, Stephan, 73773 Aichwald (DE); Rasic, Damir, 70193 Stuttgart (DE); Schuller, Karl-Heinz, 71134 Aidlingen (DE)

(57) **Zusammenfassung**

Die Erfindung betrifft ein Fahrzeug, insbesondere Nutzfahrzeug, mit einem Fahrerhaus (11) und einer Kühlvorrichtung (12) für einen Verbrennungsmotor, die einen Wärmetauscher (13) aufweist, der von einem den Verbrennungsmotor kühlenden Kühlmittel durchströmt ist. Zur Erzielung einer großen Kühlleistung mittels eines räumlich ungeteilten, baueinheitlichen Wärmetauschers, der innerhalb der Kontur des Fahrerhauses liegt, ist der Wärmetauscher (13) in einem Schacht (16) angeordnet, der sich über die Rückwand des Fahrerhauses (11) ausdehnt. Der Wärmetauscher erstreckt sich im Schacht parallel zur Fahrerhaus-Rückwand und begrenzt mindestens einen der Rückwand (111) zugekehrten luftdurchströmbaren Schachtbereich (161).

## Beschreibung

Die Erfindung betrifft ein Fahrzeug, insbesondere ein Nutzfahrzeug, gemäß dem Oberbegriff des Anspruchs 1.

Bei einem bekannten Nutzfahrzeug dieser Art (DE 29 41 093 C2) weist die Kühlvorrichtung für den Verbrennungsmotor einen im Motorraum angeordneten Wärmetauscher mit einem zugehörigen Gebläse, der auf den durchschnittlichen Kühlleistungsbedarf des Verbrennungsmotors ausgelegt ist, und einen Zusatzwärmetauscher mit Zusatzgebläse auf, der bei erhöhtem Kühlleistungsbedarf des Verbrennungsmotors zuschaltbar ist. Der Zusatzwärmetauscher ist innerhalb eines im Bereich der Rückwand des Fahrzeughauses von dessen Dach herunterführenden Schachtes, dort als Kanal bezeichnet, angeordnet. Der Kanal mit integriertem Zusatzwärmetauscher erstreckt sich entweder seitlich am Fahrerhaus vor einem sich an das Fahrerhaus anschließenden Aufbau oder im Bereich der Rückwand des Fahrerhauses zwischen den Sitzen oder ist in der Seitenwand oder in der Rückwand des Fahrerhauses integriert. Im Kanal ist der Wärmetauscher mit Neigung nach hinten oder quer zur Kanalachse mit kleiner Stirnfläche und einer große Tiefe in Luftströmungsrichtung ausgerichtet und wird dadurch von einer nach oben weisenden Lufteintrittsseite bis zu einer nach unten weisenden Luftaustrittsseite durchströmt. Das Zusatzgebläse ist auf dem Dach des Fahrerhauses angeordnet und an einer Lufteintrittsöffnung des Kanals angeschlossen.

Am unteren Ende des Kanals ist eine Luftaustrittsöffnung vorgesehen.

Der Erfindung liegt die Aufgabe zugrunde, bei einem Fahrzeug, insbesondere Nutzfahrzeug, der eingangs genannten Art für eine von der Kühlvorrichtung abgeforderte, große Kühlleistung einen räumlich ungeteilten, also nicht auf Frontkühler und Zusatzkühler aufgeteilten, baueinheitlichen Wärmetauscher zu verwenden und diesen innerhalb der Konturen des Fahrzeughauses unterzubringen.

Die Aufgabe ist erfindungsgemäß durch die Merkmale des Anspruchs 1 gelöst.

Das erfindungsgemäße Fahrzeug, insbesondere Nutzfahrzeug, hat den Vorteil, dass die gesamte Fläche der Rückwand zur Unterbringung des Wärmetauschers zur Verfügung steht und letzterer daher zur Erzielung einer großen Kühlleistung nur mit einer geringen Tiefe in Längsrichtung des Nutzfahrzeuges ausgeführt zu werden braucht. Auf der Rückseite des Fahrerhauses ist bei Nutzfahrzeugen immer ausreichend Platz vorhanden, da üblicherweise Aufbauten oder Sattelauflieger mit relativ großem Abstand vom Fahrerhaus aufgenommen sind. Die den mindestens einen Schachtbereich durchströmende Luft streicht an dem vorteilhaft flach ausgebildeten Wärmetauscher entlang und nimmt die Wärme des den Wärmetauscher durchströmenden Wärmeübertragungsmittel auf. Darüber hinaus kann der Schacht mit integriertem Wärmetauscher als energieabsorbierende Knautschzone herangezogen werden, so dass ein Intrusionsschutz gegen in das Fahrerhaus eindringende Ladung bei Unfällen erzielt wird. Durch die großflächige Belegung der Rückwand des Fahrerhauses mit dem Schacht mit integriertem Wärmetauscher kann der Wärmetauscher direkt zur Heizung des Fahrerhauses über dessen Rückwand herangezogen werden, insbesondere dann, wenn die Rückwand selbst zur Ausbildung einer Schachtwand verwendet wird.

Vorteilhafte Ausführungsformen des erfindungsgemäßen Fahrzeugs mit zweckmäßigen Weiterbildungen und Ausgestaltungen der Erfindung sind in den weiteren Patentansprüchen angegeben.

Gemäß einer vorteilhaften Ausführungsform der Erfindung weist der Wärmetauscher parallel zur Rückwand verlaufende Leitungen für das Wärmeübertragungsmittel auf, die miteinander, vorzugsweise über dazwischenliegende Kühlbleche, verbunden sind, wobei vorteilhafterweise die Leitungen mittels zweier aufeinanderliegender Wellbleche gebildet sind, die längs der an- einanderstoßenden Wellen miteinander verbunden sind. Bei dieser Ausbildung von Schacht und Wärmetauscher wird einerseits eine fertigungstechnisch sehr kostengünstige Kühlvorrichtung erhalten und andererseits wirkt der Schacht mit integriertem Wärmetauscher bei Unfällen, die ein Nachvornschieben der Ladung auslösen, als Sandwich mit sehr großem Energieabbauvermögen.

Gemäß einer vorteilhaften Ausführungsform der Erfindung begrenzt der Wärmetauscher im Schacht mindestens einen zweiten, von dem mindestens einen ersten Wärmetauscher getrennten, luftdurchströmbaren Schachtbereich, was vorzugsweise dadurch erreicht wird, dass der Wärmetauscher sich etwa mittig im Schacht parallel zur Fahrerhaus-Rückwand erstreckt.

Gemäß einer vorteilhaften Ausführungsform der Erfindung ist in jedem der beiden durch den Wärmetauscher begrenzten Schachtbereiche des Schachts eine schwenkbare Luftklappe zum Absperren und Freigeben des jeweiligen Schachtbereichs zugeordnet. Durch Schließen des der Rückwand zugekehrten vorderen Schachtbereichs strömt die Luft ausschließlich im hinteren Schachtbereich und durch die im vorderen Schachtbereich stehende Luft wird viel Wärme aus den Leitungen des Wärmetauschers von der stehenden Luft aufgenommen und an die Rückwand des Fahrerhauses abgegeben, so dass sich das Fahrerhaus stark erwärmt. Im Sommerbetrieb oder bei hohen Temperaturen wird umgekehrt die mindestens eine Luftklappe im hinteren Schachtbereich geschlossen, so dass die Luft ausschließlich durch den vorderen Schachtbereich strömt. Durch den großen Luftstrom im vorderen Schachtbereich findet ein nur geringer Wärmeaustausch der Luft mit der Rückwand statt, so dass sich das Fahrerhaus nur geringfügig erwärmt. Durch Zwischenstellungen der Luftklappen in den beiden Schachtbereichen kann die Luftdurchströmungsmenge in den Schachtbereichen eingestellt und damit die an die Rückwand des Fahrerhauses abgegebene Wärmemenge dosiert werden.

Gemäß einer vorteilhaften Ausführungsform der Erfindung ist im Schacht, vorzugsweise an einem Ende, insbesondere am oberen Ende des Schachts, ein Gebläse angeordnet. Durch dieses Gebläse wird zusätzlich Luft in den Schacht hinein gesaugt oder hinein geblasen und damit der Luftstrom durch den Wärmetauscher erhöht. Dies ist insbesondere bei Bergfahrt des Nutzfahrzeugs von Vorteil, da infolge der geringen Geschwindigkeit des Nutzfahrzeuges ein relativ geringer Luftstrom über die Lufteintrittsöffnung in den Schacht einströmt.

Die Erfindung ist anhand eines in der Zeichnung dargestellten Ausführungsbeispiels im folgenden näher beschrieben. Es zeigen in schematischer Darstellung:
- Fig. 1: ausschnittweise eine Seitenansicht eines Nutzfahrzeugs mit einer Kühlvorrichtung für den Verbrennungsmotor des Nutzfahrzeugs,
- Fig. 2: einen Schnitt längs der Linie II - II in Fig. 1.

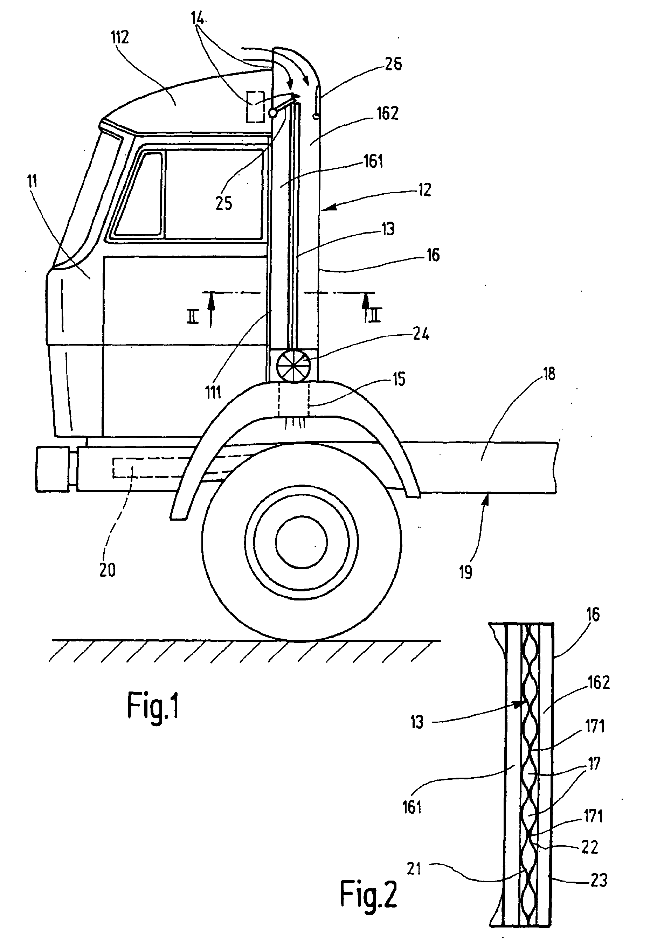

Das in Fig. 1 als Lastkraftwagen ausschnittweise in Seitenansicht skizzierte Fahrzeug weist ein Fahrerhaus 11 und einen nicht dargestellten, im Abstand vom Fahrerhaus sich anschließenden Aufbau oder Sattelauflieger auf. Unter- und innerhalb des Fahrerhauses 11 ist in bekannter Weise ein hier nicht dargestellter Verbrennungsmotor zum Antrieb des Nutzfahrzeugs angeordnet. Zur Kühlung des Verbrennungsmotors ist ein Kühlvorrichtung 12 vorgesehen, die einen von einem Wärmeübertragungsmittel, z.B. Kühlwasser, durchflossenen Wärmetauscher 13 aufweist. Der Wärmetauscher 13 ist in einem Schacht 14 aufgenommen, der vertikal ausgerichtet an der Rückwand 111 des Fahrerhauses 11 angeordnet ist und am oberen Ende eine Lufteinströmöffnung 14 und am unteren Ende eine Luftausströmöffnung 15 aufweist. Vorzugsweise erstreckt sich der Schacht 14 großflächig über die gesamte Rückwand 111 des Fahrerhauses 11 und weist eine geringe Tiefe in Fahrzeuglängsrichtung auf. Der Schacht 16 ist so angeordnet, dass die Lufteinströmöffnung 14 oberhalb des Dachs 112 liegt, wobei die Normale der Lufteinströmöffnung 14 in Fahrtrichtung des Fahrzeugs weist. Dabei kann die Lufteinströmöffnung 14 sich über die volle Breite des Fahrerhauses 11 erstrecken. Alternativ können Lufteinströmöffnung 13 und Luftausströmöffnung 15 aber auch seitlich des Fahrerhauses 11 in den voneinander abgekehrten Schachtwänden angeordnet sein. In diesem Fall kann die komplette Höhe des Fahrerhauses 11 zur Schaffung der Luftein- und -ausströmöffnung 14, 15 ausgenutzt werden. In bevorzugter Weise wird die dem Fahrerhaus 11 zugekehrte Schachtwand des Schachts 16 von der Rückwand 111 des Fahrerhauses 11 selbst gebildet.

Der Wärmetauscher 13 ist im Schacht 16 angeordnet und erstreckt sich parallel zur Rückwand 111 des Fahrerhauses 11, wobei er mindestens einen sich längs der Rückwand 111 ausdehnenden, luftdurchströmbaren Schachtbereich 161, im folgenden vorderer Schachtbereich 161 genannt, begrenzt. Vorzugsweise ist der Wärmetauscher 17 etwa mittig im Schacht 16 angeordnet und begrenzt noch einen weiteren, von der Rückwand 111 abgekehrten, luftdurchströmbaren Schachtbereich 162 im folgenden hinterer Schachtbereich 162 genannt, der durch den Wärmetauscher 13 von dem vorderen Schachtbereich 161 getrennt ist. Der Wärmetauscher 13 weist eine Vielzahl von parallelen Leitungen 17 auf, die an einem Ende an einem Zulauf für das Wärmeübertragungsmittel und am anderen Ende an einem Ablauf für das Wärmeübertragungsmittel angeschlossen sind. Der Zu- und Ablauf für das Wärmeübertragungsmittel verläuft innerhalb der das Fahrerhaus 11 aufnehmenden Längsträger 18 des Fahrzeugsrahmens 19 zum Verbrennungsmotor. In Fig. 1 ist schematisch der Zulauf 20 im Längsträger 18 strichliniert eingezeichnet. Der Ablauf würde dann im anderen Längsträger 18 angeordnet sein. Alternativ können die Längsträger 18 auch so ausgebildet sein, dass Abschnitte der Längsträger 18 den Zu- und Ablauf für das Wärmeübertragungsmittel selbst bilden. Die in einer Linie aneinandergereihten, parallelen Leitungen 17 für das Wärmeübertragungsmittel sind parallel zur Rückwand 111 des Fahrerhauses 11 ausgerichtet und miteinander ggf. über Kühlbleche 171, verbunden. Die Leitungen 17 verlaufen im dargestellten Ausführungsbeispiel vertikal, sie können aber auch horizontal ausgerichtet werden. Bevorzugt werden die Leitungen 17 mittels zweier aufeinanderliegender Wellbleche 21, 22 hergestellt, wie dies in Fig. 2 skizziert ist. Die aneinanderstoßenden Wellen der Wellbleche 21, 22, die den Kühlblechbereich bilden, sind fest miteinander verbunden, z.B. verschweißt, so dass ein Übertritt von Wärmeübertragungsmittel von der einen Leitung 17 in die benachbarten Leitungen 17 unterbunden ist. Die Stirnöffnungen an den beiden Enden der so gebildeten Leitungen 17 sind jeweils von einem Sammelkasten 23 überdeckt (Fig. 2), von denen ein Sammelkasten 23 an den Zulauf 20 und ein Sammelkasten an den Ablauf für das Wärmeübertragungsmittel angeschlossen ist.

Um den durch den Schacht 16 und damit durch den Wärmetauscher 13 strömenden Luftstrom zu verstärken ist im Schacht 16 noch ein Gebläse 24 vorgesehen, das Luft aus der Umgebung in den Schacht 16 einbläst oder einsaugt. Im Ausführungsbeispiel der Fig. 1 ist das Gebläse 24 als Sauggebläse ausgebildet und an oder nahe der Luftausströmöffnung 15 des Schachts 16, den beiden Schachtbereichen 161, 162 vorgelagert, angeordnet. Es ist aber auch möglich das Gebläse 24 als Druckgebläse nahe der oberen Lufteinströmöffnung 14 des Schachts 16 anzuordnen.

Der Wärmetauscher 13 kann zugleich als Heizung für das Fahrerhaus 11 herangezogen werden. Hierzu ist jedem Schachtbereich 161, 162 eine schwenkbare Luftklappe 25 bzw. 26 zugeordnet, die den jeweiligen Schachtbereich 161 bzw. 162 vollständig verschließt oder vollständig öffnet und jede beliebige Schwenkstellung zwischen diesen beiden Endlagen einnehmen kann. Im Winterbetrieb oder bei niedrigen Außentemperaturen wird die Luftklappe 25 im vorderen Schachtbereich 161 vollständig geschlossen und die Luftklappe 26 des hinteren Schachtbereichs 162 vollständig geöffnet, wie dies in Fig. 1 dargestellt ist. Die Kühlluft durchströmt ausschließlich den hinteren Schachtbereich 162, während im vorderen Schachtbereich 161 die Luft steht. Die stehende Luft nimmt viel Wärme aus dem Wärmetauscher 13 auf und erwärmt sich entsprechend stark. Diese Wärme wird an die die Schachtwand bildende Rückwand 111 des Fahrerhauses 11 abgegeben, und über die Rückwand 11 wird das Fahrerhaus 11 sehr stark erwärmt. Im Sommerbetrieb oder bei hohen Außentemperaturen wird die Klappenstellung der beiden Luftklappen 25, 26 umgekehrt. Nunmehr ist die Luftklappe 25 des vorderen Schachtbereichs 161 vollständig geöffnet und der hintere Schachtbereich 162 durch die Luftklappe 26 vollständig verschlossen. Die in den Schacht 16 einströmende Luft durchströmt ausschließlich den vorderen Schachtbereich 161. Durch den großen Luftstrom findet ein nur geringer Wärmeaustausch der Luft mit der Rückwand 111 des Fahrerhauses 11 statt, und das Fahrerhaus 11 erwärmt sich nur sehr wenig. Eine Regulierung der vom Wärmetauscher 13 an die Rückwand 111 des Fahrerhauses 11 abgegebene Wärmemenge wird durch Zwischenstellungen der beiden Luftklappen 25, 26 erreicht.

In einer modifizierten Ausführung sind die beiden Schachtbereiche 161, 162 durch jeweils eine etwa mittige Trennwand in zwei Teilbereiche getrennt. Die beiden Trennwände verlaufen bei oben und unten liegenden Lufteinström- und - ausströmöffnungen 14, 15 beispielsweise etwa in Fahrerhausmitte, wodurch die Teilbereiche zur getrennten Heizung des Fahrerhauses auf der Fahrer- und Beifahrerseite genutzt werden können, indem jedem der Teilbereiche eine Luftklappe zugeordnet wird.

In einer weiteren Ausführungsform der Kühlvorrichtung 12 kann in dem Schacht 16 mit integriertem Wärmetauscher 13 eine Aussparung für ein in der Rückwand 111 angeordnetes, rückwärtiges Fenster des Fahrerhauses 11 vorgesehen werden. Darüber hinaus kann der Schacht 16 mit Wärmetauscher 13 so gestaltet werden, dass er eine tragende Struktur des Fahrerhauses bildet, und kann als Innenraumbeplankung oder Außenbeplankung des Fahrerhauses ausgebildet werden.

## Patentansprüche

1. Fahrzeug, insbesondere Nutzfahrzeug, mit einem Fahrerhaus (11) und einer Kühlvorrichtung (12) für einen Verbrennungsmotor, die einen von einem Wärmeübertragungsmittel durchströmbaren Wärmetauscher (13) aufweist, der in einem im Bereich der Rückwand (111) des Fahrerhauses (11) verlaufenden, eine Luftein- und - ausströmöffnung (14, 15) aufweisenden Schacht (16) angeordnet ist,
**dadurch gekennzeichnet,**
**dass** der Schacht (16) auf der Rückwand (11) des Fahrerhauses (11) angeordnet ist und der Wärmetauscher (13) sich parallel zur Rückwand (111) erstreckt und mindestens einen vorzugsweise längs der Rückwand (111) sich ausdehnenden, luftdurchströmbaren Schachtbereich (161) begrenzt.

2. Fahrzeug nach Anspruch 1,
**dadurch gekennzeichnet,**
**dass** der Wärmetauscher (13) im Schacht (16) mindestens einen zweiten von dem mindestens einen ersten Schachtbereich (161) getrennten, luftdurchströmbaren Schachtbereich (171) begrenzt.

3. Fahrzeug nach Anspruch 2,
**dadurch gekennzeichnet,**
**dass** der Wärmetauscher (13) etwa mittig im Schacht (16) angeordnet ist.

4. Fahrzeug nach einem der Ansprüche 1 - 3,
**dadurch gekennzeichnet,**
**dass** der Wärmetauscher (13) parallel zur Rückwand (111) verlaufende Leitungen (17) für das Wärmeübertragungsmittel aufweist, die parallel zueinander ausgerichtet und vorzugsweise mit dazwischen angeordneten Kühlblechen (171), aneinandergereiht sind.

5. Fahrzeug nach Anspruch 4,
**dadurch gekennzeichnet,**
**dass** die Leitungen (19) mittels zweier aufeinanderliegender Wellbleche (21, 22) gebildet sind, die an den a-nein- anderstoßenden Wellen miteinander verbunden sind.

6. Fahrzeug nach einem der Ansprüche 1 - 5,
**dadurch gekennzeichnet,**
**dass** der Schacht (16) sich über die gesamte Fläche der Rückwand (111) erstreckt.

7. Fahrzeug nach einem der Ansprüche 1 - 6,
**dadurch gekennzeichnet,**
**dass** die dem Fahrerhaus (11) zugekehrte Schachtwand des Schachtes (16) von der Rückwand (111) des Fahrerhauses (11) gebildet ist.

8. Fahrzeug nach einem der Ansprüche 1 - 7,
**dadurch gekennzeichnet,**
**dass** die Lufteinströmöffnung (14) am oberen Ende und die Luftaustrittsöffnung (15) am unteren Ende des Schachtes (16) angeordnet ist.

9. Fahrzeug nach Anspruch 8,
**dadurch gekennzeichnet,**
**dass** die Lufteinströmöffnung (14) oberhalb des Dachs (112) des Fahrerhauses (11) mit einer in Fahrtrichtung weisenden Öffnungsnormalen angeordnet ist.

10. Fahrzeug nach Anspruch 8 oder 9,
**dadurch gekennzeichnet,**
**dass** die Luftein- und -ausströmöffnung (14, 15) seitlich des Fahrerhauses (11) angeordnet ist.

11. Fahrzeug nach einem der Ansprüche 1 - 10,
**dadurch gekennzeichnet,**
**dass** ein Gebläse (24) einer Luftein- und - ausströmöffnung (14, 15) in Luftströmungsrichtung nachoder vorgeordnet, vorzugsweise am oberen oder unteren Ende des Schachts (16) angeordnet, ist.

12. Fahrzeug nach einem der Ansprüche 1 - 11,
**dadurch gekennzeichnet,**
**dass** der Wärmetauscher (13) einen Zu- und einen Ablauf (20) für das Wärmeübertragungsmittel aufweist, die innerhalb von das Fahrerhaus (11) tragenden Längsträgern (18) des Fahrzeugrahmens (19) verlaufen oder von den hohl ausgebildeten Längsträgern (18) selbst gebildet sind.

13. Fahrzeug nach einem der Ansprüche 2 - 12,
**dadurch gekennzeichnet,**
**dass** jedem Schachtbereich (161, 162) des Schachts (16) eine schwenkbare Luftklappe (25, 26) zum Absperren und Freigeben des zugeordneten Schachtbereichs (161, 162) zugeordnet ist.

14. Fahrzeug nach einem der Ansprüche 1 - 13,
**dadurch gekennzeichnet,**
**dass** der Schacht (16) mit Wärmetauscher (13) als Crashbox zum Abbau von Stoßenergie ausgebildet ist.

15. Fahrzeug nach einem der Ansprüche 7 - 14,
**dadurch gekennzeichnet,**
**dass** der Schacht (16) mit Wärmetauscher (13) als tragende Struktur des Fahrerhauses ausgebildet ist.

16. Fahrzeug nach einem der Ansprüche 7 - 15,
**dadurch gekennzeichnet,**
**dass** der Schacht (16) mit Wärmetauscher (13) als Innenraumbeplankung oder Außenbeplankung des Fahrerhauses ausgebildet ist.
